# DEMANDE DE BREVET EUROPEEN

(11) **EP 1 352 934 A1**
(43) Date de publication de la demande: **15.10.2003**
(21) Numéro de dépôt: 03290624.0
(22) Date de dépôt: 13.03.2003
(51) Int. Cl.: C09D 177/00, C09D 177/02, C09D 177/06, C08L 77/00, C08L 77/02, C08L 77/06, C09D 5/08, C09D 123/08, C08L 23/08, C09D 151/06, C08L 51/06

(54) **Surfaces métalliques revêtues de polyamide**

(30) Priorité: 08.04.2002 FR 0204312
(71) Demandeur: Atofina, 92800 Puteaux (FR)
(72) Inventeur: Amouroux, Nicolas, 27300 Valailles (FR)
(74) Mandataire: Neel, Henry

(57) **Abrégé**

La présente invention concerne une surface métallique revêtue comprenant successivement en partant du métal:
- éventuellement une couche de primaire,
- éventuellement une couche de liant,
- une couche à base de polyamide constituée d'un mélange de polyamide et d'une polyoléfine fonctionnalisée par un anhydride d'acide carboxylique insaturé.

La surface métallique est avantageusement la surface extérieure de tubes. Ces tubes peuvent être de diamètre quelconque mais l'invention est particulièrement utile pour les tubes de faible diamètre, par exemple de 4 à 50mm de diamètre extérieur.

Le métal peut être quelconque mais l'invention est très utile pour l'acier et ses alliages ainsi que pour l'aluminium et ses alliages.

L'aluminium peut être anodisé ainsi la surface revêtue de l'invention comprend l'aluminium, la couche d'anodisation, le primaire éventuel, le liant éventuel et la couche à base de PA.

L'acier peut être revêtu par le zinc ou un alliage à base de Zn (tel que par exemple un mélange Zn-Al ou Zn-Fe) ou par l'aluminium ou un alliage à base d'Al et/ou traité par chromatation ou phosphatation. Ainsi la surface revêtue de l'invention comprend l'acier, la couche éventuelle de zinc ou d'aluminium, la couche éventuelle de traitement par chromatation ou phosphatation, le primaire éventuel, le liant éventuel et la couche à base de PA. De préférence la chromatation est effectuée au CrIII.

## Description

### [Domaine de l'invention]

Des tubes métalliques de faible diamètre, par exemple de 4 mm à 50mm, sont utilisés dans l'automobile (ligne de frein, ligne essence, direction assistée, climatisation, hydraulique). Les métaux les plus utilisés sont l'acier zingué et l'aluminium. Ces tubes doivent être revêtus pour les protéger de la corrosion, on utilise habituellement le polyamide 11 et le polyamide 12. Les procédés de revêtements courants sont le revêtement par poudrage sur tube froid (puis on chauffe pour fondre la poudre et former un film) ou par poudrage sur tube chaud et le revêtement par extrusion du polyamide fondu. Les polyamides protégent non seulement de la corrosion mais apportent aussi une résistance mécanique. L'invention concerne de nouveaux revêtements à base de polyamide dans lequel on a ajouté une polyoléfine fonctionnalisée par un anhydride d'acide carboxylique et en particulier ceux qu'on fait par extrusion.

Les tubes métalliques à revêtir peuvent aussi être traités par une chromatation. Jusqu'à présent les chromatatations s'effectuaient avec du CrVI mais ces solutions à base de CrVI ne pourront plus être utilisées au delà de 2003 (application d'une réglementation européenne restreignant l'usage du CrVI). Les systèmes de revêtements proposés dans la présente invention ont des bonnes performances en utilisant la chromatation au Chrome III (CrIII).

### [l'art antérieur et le problème technique]

Le brevet GB 1253633 décrit un revêtement d'une surface en acier par une poudre constituée d'un mélange d'époxy et de copolyamide 6/6-6/12 sans utiliser de primaire.

La demande de brevet JP 10120972 A publiée en 1998 décrit un revêtement d'une surface en acier par une poudre constituée d'un mélange de polyamide et de mélamine sans utiliser de primaire.

La demande de brevet JP 10330651 A publiée en 1998 décrit un revêtement d'une surface en acier par une poudre constituée d'un mélange de polyamide et d'une résine hydrocarbonée alicyclique contenant des fonctions OH sans utiliser de primaire.

Le brevet EP 969053 décrit le revêtement d'une surface métallique par une poudre constituée d'un mélange de polyamide et d'une cire de polyéthylène sans utiliser de primaire. La poudre est déposée par un procédé électrostatique et la cire évite que la poudre ne se décroche de la surface pendant son chauffage.

La demande de brevet US 2001-0023537 A décrit une surface métallique revêtue successivement d'un primaire en organosilane puis d'un polyamide.

La demande de brevet JP 56036550 A publiée en 1981 décrit un revêtement du même genre que le précédent mais le primaire est un mélange de bisphénol, d'épichlorhydrine, d'un phénol et d'un acide monocarboxylique déposé en solution dans un solvant organique.

La demande de brevet JP 52026585 A publiée en 1977 décrit une surface métallique revêtue successivement d'un primaire qui est un polypropylène chargé d'un silane puis d'un polyamide.

Le brevet DE 4400811 décrit une surface métallique pouvant être zinguée revêtue successivement d'une couche de chromatation puis d'un polyamide.

Le brevet EP768488 décrit une surface métallique revêtue successivement soit d'un thermoplastique pouvant être du polyamide soit d'un époxy puis soit d'un élastomère soit d'un alliage de polyamide.

La demande de brevet JP 09262903 A publiée en 1997 décrit une surface métallique revêtue successivement d'un primaire qui est un mélange d'un époxy et d'un silane puis d'un polyamide.

La demande de brevet JP61296079 A publiée en 1986 décrit une surface métallique revêtue sans primaire par une composition à base de polyamide. La dite composition est constituée de :
100 parties comprenant:
   - 50 à 99,5% de polyamide,
   - 50 à 0,5% d'un ou plusieurs produits choisis parmi les ionomères, les EPR et les polyoléfines greffées par un groupe polaire,
   - 0,1 à 5 parties d'un silane,
   - 0,005 à 4 parties d'un antioxydant.

Le brevet US 4690856 décrit une surface métallique revêtue sans primaire par une composition très proche de la précédente.

Le brevet GB 2262939 décrit une surface métallique revêtue successivement d'un primaire époxy puis d'une composition qui est un mélange d'un polyamide amorphe et d'un polymère contenant un groupe acide. Le polymère contenant le groupe acide est un copolymère de l'éthylène et de l'acide acrylique à 12% en poids d'acide.

La demande de brevet WO 9530109 décrit des surfaces en acier pouvant être zingué et pouvant aussi être traité par du chromate, du phosphate ou encore un alliage de zinc et d'Aluminium revêtues de polymères. Ce revêtement peut être:
- soit une couche d'un mélange de polyamide 12 et d'un ionomère puis une couche extérieure de polyamide 12,
- soit une couche d'ionomère puis une couche extérieure d'un mélange de polyamide 12 et d'un ionomère,
- soit une couche d'un mélange de polyamide 12 et d'un ionomère puis une couche extérieure de polyamide 6.

L'utilisation des silanes dans la couche de polyamide ou dans la couche de primaire oblige à travailler dans des conditions telles que ces compositions soient à l'abri de l'humidité durant leur stockage avant leur utilisation. L'utilisation des ionomères comme liant entre la surface d'acier éventuellement traitée et la couche de polyamide ne donne pas une adhésion suffisante pour résister au brouillard salin. L'ajout d'un ionomère ou d'un copolymère de l'éthylène et de l'acide acrylique dans le polyamide n'est pas suffisant pour que cette couche ait une bonne adhésion après une exposition au brouillard salin.

On a maintenant trouvé qu'en ajoutant dans le polyamide une polyoléfine fonctionnalisée par un anhydride d'acide carboxylique insaturé on obtenait un revêtement résistant au brouillard salin.

### [Brève description de l'invention]

La présente invention concerne une surface métallique revêtue comprenant successivement en partant du métal:
- éventuellement une couche de primaire,
- éventuellement une couche de liant,
- une couche à base de polyamide constituée d'un mélange de polyamide et d'une polyoléfine fonctionnalisée par un anhydride d'acide carboxylique insaturé.

La surface métallique est avantageusement la surface extérieure de tubes. Ces tubes peuvent être de diamètre quelconque mais l'invention est particulièrement utile pour les tubes de faible diamètre, par exemple de 4 à 50mm de diamètre extérieur.

Le métal peut être quelconque mais l'invention est très utile pour l'acier et ses alliages ainsi que pour l'aluminium et ses alliages.

L'aluminium peut être anodisé ainsi la surface revêtue de l'invention comprend l'aluminium, la couche d'anodisation, le primaire éventuel, le liant éventuel et la couche à base de PA.

L'acier peut être revêtu par le zinc ou un alliage à base de Zn (tel que par exemple un mélange Zn-Al ou Zn-Fe) ou par l'aluminium ou un alliage à base d'Al et/ou traité par chromatation ou phosphatation. Ainsi la surface revêtue de l'invention comprend l'acier, la couche éventuelle de zinc ou d'aluminium, la couche éventuelle de traitement par chromatation ou phosphatation, le primaire éventuel, le liant éventuel et la couche à base de PA. De préférence la chromatation est effectuée au CrIII.

L'avantage de la présence de la polyoléfine fonctionnalisée dans le polyamide est double : dans les cas où on n'utilise pas de primaire, les nodules de polyoléfine fonctionnalisée présents à l'interface augmentent l'adhérence, dans les cas où un primaire est utilisé, la présence d'une phase « molle » relaxe les contraintes internes, le cheminement à l'entaille est réduit.

La présente invention concerne aussi un procédé de fabrication de ces surfaces revêtues. l'anodisation, la chromatation ou la phosphatation sont des traitements connus en eux mêmes et sont effectués selon les techniques habituelles. Éventuellement après l'anodisation ou la chromatation (ou la phosphatation) on peut utiliser un plasma froid pour nettoyer/oxyder la surface du tube en acier zingué chromaté CrIII avant le revêtement de primaire ou de polyamide.

Le primaire est déposé sous forme liquide ou par projection ou projection électrostatique si c'est une poudre sur la surface métallique. La surface métallique est ensuite chauffée à 200-240°C, après environ 20 à 30 secondes, c'est-à-dire avant que le primaire ne soit réticulé ou dans le cas d'un époxy peu avant la fin du temps de gel et avant que la résine ne soit réticulée pour qu'il reste des fonctions. Selon une variante on peut aussi déposer le primaire sur le tube déjà chaud. On dépose ensuite le liant eventuel soit par projection si celui-ci est en poudre, soit par couchage ou laminage. Ensuite, on dépose de la même façon le polyamide.

S'agissant de la surface extérieure de tubes métalliques, on procède de la même façon pour le primaire ou bien on l'extrude dans une filière annulaire (aussi appelée tête d'équerre) puis le liant éventuel est soit déposé par projection s'il est disponible en poudre soit extrudé dans une filière annulaire disposée concentriquement autour du tube. Le liant peut aussi être extrudé dans une filière plate produisant un ruban continu qu'on enroule autour du tube par exemple grâce à la rotation du tube sur lui-même. Le polyamide est déposé ensuite de la même façon. On peut aussi déposer le liant et le PA simultanément par coextrusion.

Selon une forme preferrée de l'invention elle concerne un procédé de revêtement de tubes de faible diamètre, par exemple de 4 à 50 mm de diamètre extérieur dans lequel le polyamide (contenant la polyoléfine fonctionnalisée) est déposé à l'état fondu par un dispositif quelconque permettant de recouvrir toute la surface extérieure du tube. Ce dispositif peut être une tête d'équerre qu'on utilise pour gainer des câbles métalliques (par ex câbles électriques) par une matière en fusion. Le liant éventuel est déposé de la même façon que le polyamide. Le liant et le polyamide peuvent être déposés simultanément par coextrusion, c'est à dire que le même dispositif alimenté en liant fondu et en polyamide fondu les dépose sur la couche extérieure du tube en respectant l'ordre : en partant du tube et en allant vers l'extérieur d'abord le liant puis le polyamide.

Il est recommandé de baisser le plus possible la température du tube sur lequel on extrude le polyamide. Cependant il faut que la température du tube soit telle que le polyamide ne cristallise pas trop vite, sinon l'adhérence sera mauvaise. Il faut au moins que le tube soit à la température de fusion du PA. A titre d'exemple pour le PA 12 la température du tube (température de la couche sur laquelle on vient extruder le PA 12) devrait être entre 175 et 200°C pour obtenir la meilleure adhérence.

Si la température du tube est trop chaude on détruit la chromatation, si la température du tube est trop froide le PA cristallise trop vite. Si on met un liant on peut moins chauffer. La température recommandée pour le tube est Tf du liant + 30°C ou Tf PA + 30°C si il n'y a pas de liant. Il faut aussi veiller à réticuler le primaire.

### [Description détaillée de l'invention]

S'agissant du primaire on désigne ainsi tout produit qui facilite l'adhésion sur la surface métallique. c'est par exemple un époxy ou un époxy acrylate. L'appellation "primaire époxy" désigne avantageusement le produit de la réaction d'une résine époxy thermodurcissable et d'un durcisseur. Leur principe est décrit par exemple dans KIRK-OTHMER Encyclopedia of Chemical Technology Vol. 9 - pages 267-289 3ème édition. Cette couche peut être définie aussi comme tout produit de la réaction d'un oligomère porteur de fonctions oxirane et d'un durcisseur. De par les réactions mises en jeu lors de la réaction des ces résines époxy on aboutit à un matériau réticulé correspondant à un réseau tridimensionnel plus ou moins dense selon les caractéristiques de base des résines et durcisseurs employés.

On entend par résine époxy tout composé organique possédant au moins deux fonctions de type oxirane, polymérisable par ouverture de cycle. Le terme "résines époxy" désigne toutes les résines époxy usuelles liquides à température ambiante (23°C) ou à température plus élevée. Ces résines époxy peuvent être monomériques ou polymériques d'une part, aliphatiques, cycloaliphatiques, hétérocycliques ou aromatiques d'autre part. A titre d'exemples de telles résines époxy, on peut citer le diglycidyl éther de résorcinol, le diglycidyl éther de bisphénol A, le triglycidyl p-amino phénol, le diglycidyléther de bromo-bisphénol F, le triglycidyléther de m-amino phénol, le tétraglycidyl méthylène dianiline, le triglycidyl éther de (trihydroxyphényl) méthane, les polyglycidyl éthers de phénol-formaldéhyde novolac, les polyglycidyls éthers d'orthocrésol novolac et les tétraglycidyl éthers de tétraphényl éthane. Des mélanges d'au moins deux de ces résines peuvent aussi être utilisés.

On préfère les résines époxy possédant au moins 1.5 fonctions oxirane par molécule et plus particulièrement les résines époxy contenant entre 2 et 4 fonctions oxirane par molécule. On préfère également les résines époxy possédant au moins un cycle aromatique comme les diglycidyls éthers de bisphénol A.

S'agissant du durcisseur de manière générale on utilise comme durcisseurs les durcisseurs des résines époxy qui réagissent à température ambiante ou à des températures supérieures à la température ambiante. A titre d'exemples non limitatif on peut citer :
- Les anhydrides d'acide, parmi lesquels l'anhydride succinique,
- Les polyamines aromatiques ou aliphatiques, parmi lesquelles la diamino diphényl sulphone (DDS) ou encore la méthylène dianiline ou encore la 4,4'-Méthylènebis-(3-chloro-2,6-diéthylaniline) (MCDEA),
- La dicyandiamide et ses dérivées.
- Les imidazoles
- Les acides polycarboxyliques
- Les polyphénols

Les résines utilisées dans la présente invention sont réticulables entre 180 et 250° C.

Le temps de gel est défini par la norme AFNOR NFA 49-706. C'est le temps nécessaire pour provoquer un accroissement rapide de la viscosité à une température déterminée. Le temps de gel est avantageusement compris entre 20 et 60 secondes.

Avantageusement la Tg est supérieure à 120° C. Ces résines peuvent se présenter sous forme de poudre ou liquide qu'on projette sur la surface métallique préalablement chauffée.

Avantageusement ce sont des résines poudres monocomposant qui sont obtenues classiquement comme suit :
- On mélange à l'état fondu la résine époxy (solide à T ambiante - ex : DGEBA masse élevée), le durcisseur, éventuellement les accélérateurs, les charges etc... pendant cette étape il y a préréticulation mais sans aller jusqu'au point de gel
- En sortie du mélangeur, on refroidit, de façon à stopper la réticulation
- On met en poudre le solide homogène obtenu

On obtient ainsi une poudre monocomposant applicable par les procédés usuels, et qui va finir de réticuler au contact du métal chaud. Généralement, pour ces applications on privilégie des systèmes qui ne réticulent qu'à haute température (180-240°C) de façon à ce qu'à température ambiante il n'y ait pas de problème de stockage (durée de conservation ou "shelf life" ou "pot life" 6mois - 1an).

Ces résines peuvent comprendre des additifs tels que des silicones, des pigments tels que dioxyde de titane, oxydes de fer, du noir de carbone, des charges telles que du carbonate de calcium, du talc ou du mica.

Le primaire est par exemple celui vendu par ATOFINA sous la marque Primgreen®.

S'agissant du liant on désigne ainsi tout produit qui permet l'adhésion de la couche de polyamide. Avantageusement le liant est une polyoléfine fonctionnalisée portant une fonction acide carboxylique ou anhydride d'acide carboxylique. Elle peut être mélangée avec une polyoléfine non fonctionnalisée.

Pour simplifier on a décrit ci dessous des polyoléfines fonctionnalisées (B1) et des polyoléfines non fonctionnalisées (B2).

Une polyoléfine non fonctionnalisée (B2) est classiquement un homo polymère ou copolymère d'alpha oléfines ou de dioléfines, telles que par exemple, éthylène, propylène, butène-1, octène-1, butadiène. A titre d'exemple, on peut citer :
- les homo polymères et copolymères du polyéthylène, en particulier LDPE, HDPE, LLDPE(linear low density polyéthylène, ou polyéthylène basse densité lineaire), VLDPE(very low density polyéthylène, ou polyéthylène très basse densité) et le polyéthylène métallocène.
- les homopolymères ou copolymères du propylène.
- les copolymères éthylène/alpha-oléfine tels qu'éthylène/propylène, les EPR(abréviation d'éthylène-propylene-rubber) et éthylène/propyiène/diène (EPDM).
- les copolymères blocs styrène/éthylène-butène/styrène (SEBS), styrène/butadiène/styrène (SBS), styrène/isoprène/ styrène (SIS), styrène/éthylène-propylène/styrène (SEPS).
- les copolymères de l'éthylène avec au moins un produit choisi parmi les sels ou les esters d'acides carboxyliques insaturés tel que le (méth)acrylate d'alkyle (par exemple acrylate de méthyle), ou les esters vinyliques d'acides carboxyliques saturés tel que l'acétate de vinyle, la proportion de comonomère pouvant atteindre 40% en poids.

La polyoléfine fonctionnalisée (B1) peut être un polymère d'alpha oléfines ayant des motifs réactifs (les fonctionnalités) ; de tels motifs réactifs sont les fonctions acides ou anhydrides. À titre d'exemple, on peut citer les polyoléfines précédentes (B2) greffées ou co- ou ter polymérisées par des acides carboxyliques ou les sels ou esters correspondants tels que l'acide (méth)acrylique ou encore par des anhydrides d'acides carboxyliques tels que l'anhydride maléique. Une polyoléfine fonctionnalisée est par exemple un mélange PE/EPR, dont le ratio en poids peut varier dans de larges mesures, par exemple entre 40/60 et 90/10, ledit mélange étant co-greffé avec un anhydride, notamment anhydride maléique, selon un taux de greffage par exemple de 0,01 à 5% en poids.

La polyoléfine fonctionnalisée (B1) peut être choisie parmi les (co)polymères suivants, greffés avec anhydride maléique, dans lesquels le taux de greffage est par exemple de 0,01 à 5% en poids :
- du PE, du PP, des copolymères de l'éthylène avec propylène, butène, hexène, ou octène contenant par exemple de 35 à 80% en poids d'éthylène ;
- les copolymères éthylène/alpha-oléfine tels qu'éthylène/propylène, les EPR(abréviation d'éthylène-propylene-rubber) et éthyiène/propyiène/diène (EPDM).
- les copolymères blocs styrène/éthylène-butène/styrène (SEBS), styrène/butadiène/styrène (SBS), styrène/isoprène/ styrène (SIS), styrène/éthylène-propylène/styrène (SEPS).
- des copolymères éthylène et acétate de vinyle (EVA), contenant jusqu'à 40% en poids d'acétate de vinyle ;
- des copolymères éthylène et (méth)acrylate d'alkyle, contenant jusqu'à 40% en poids de (méth)acrylate d'alkyle ;
- des copolymères éthylène et acétate de vinyle (EVA) et (méth)acrylate d'alkyle, contenant jusqu'à 40% en poids de comonomères .

La polyoléfine fonctionnalisée (B1) peut aussi être un co- ou ter polymère d'au moins les motifs suivants : (1) éthylène, (2) (méth)acrylate d'alkyle ou ester vinylique d'acide carboxylique saturé et (3) anhydride tel que anhydride maléique ou acide (méth)acrylique.

A titre d'exemple de polyoléfines fonctionnalisées de ce dernier type, on peut citer les copolymères suivants, où l'éthylène représente de préférence au moins 60% en poids et où le ter monomère (la fonction) représente par exemple de 0,1 à 10% en poids du copolymère :
- les copolymères éthylène/(méth)acrylate d'alkyle / acide (méth)acrylique ou anhydride maléique;
- les copolymères éthylène/acétate de vinyle/anhydride maléique;
- les copolymères éthylène/acétate de vinyle ou (méth)acrylate d'alkyle / acide (méth)acrylique ou anhydride maléique.

Le terme "(méth)acrylate d'alkyle" dans (B1) ou (B2) désigne les méthacrylates et les acrylates d'alkyle en C1 à C12, et peut être choisi parmi l'acrylate de méthyle, l'acrylate d'éthyle, l'acrylate de n-butyle, l'acrylate d'iso butyle, l'acrylate d'éthyl-2-hexyle, l'acrylate de cyclohexyle, le méthacrylate de méthyle et le méthacrylate d'éthyle.

Les copolymères mentionnés ci-dessus, (B1) et (B2), peuvent être copolymérisés de façon statistique ou séquencée et présenter une structure linéaire ou ramifiée.

Le poids moléculaire, l'indice MFI, la densité de ces polyoléfines peuvent aussi varier dans un large mesure, ce que l'homme de l'art appréciera. MFI, abréviation de Melt Flow Index, est l'indice de fluidité à l'état fondu. On le mesure selon la norme ASTM 1238.

Avantageusement les polyoléfines (B2) non fonctionnalisées sont choisies parmi les homopolymères ou copolymères du polypropylène et tout homo polymère de l'éthylène ou copolymère de l'éthylène et d'un comonomère de type alpha oléfinique supérieur tel que le butène, l'hexène, l'octène ou le 4-méthyl 1-Pentène. On peut citer par exemple les PP, les PE de haute densité, PE de moyenne densité, PE basse densité linéaire, PE basse densité, PE de très basse densité. Ces polyéthylènes sont connus par l'Homme de l'Art comme étant produits selon un procédé « radicalaire », selon une catalyse de type « Ziegler » ou, plus récemment, selon une catalyse dite « métallocène ».

Avantageusement les polyoléfines fonctionnalisées (B1) sont choisies parmi tout polymère comprenant des motifs alpha oléfiniques et des motifs porteurs de fonctions réactives polaires comme les fonctions acide carboxylique ou anhydride d'acide carboxylique. A titre d'exemples de tels polymères, on peut citer les ter polymères de l'éthylène, d'acrylate d'alkyle et d'anhydride maléique comme les Lotader® de la Demanderesse ou des polyoléfines greffées par de l'anhydride maléique comme les Orevac® de la Demanderesse ainsi que des ter polymères de l'éthylène, d'acrylate d'alkyle et d'acide (meth) acrylique.

A titre de premier exemple de liant on peut citer un mélange d'un polyéthylène (C1) et d'un polymère (C2) choisi parmi les élastomères, les polyéthylènes de très basse densité et les copolymères de l'éthylène, le mélange (C1) + (C2) étant cogreffé par un acide carboxylique insaturé.

Le polyéthylène (C1) peut être choisi parmi les polyéthylènes cités plus haut. Avantageusement (C1) est un polyéthylène haute densité (HDPE) de densité comprise entre 0,940 à 0,965. Le MFI de (C1) est (sous 2,16 kg - 190°C) entre 0,1 et 3 g/10 min.

Le copolymère (C2) peut être par exemple un élastomère éthylène / propylène (EPR) ou éthylène / propylène / diène (EPDM). (C2) peut être aussi un polyéthylène de très basse densité (VLDPE) qui est soit un homopolymère de l'éthylène, soit un copolymère de l'éthylène et d'une alpha oléfine. (C2) peut aussi être un copolymère de l'éthylène avec au moins un produit choisi parmi (i) les acides carboxyliques insaturés, leurs sels, leurs esters, (ii) les esters vinyliques d'acides carboxyliques saturés (iii) les acides dicarboxyliques insaturés, leurs sels, leurs esters, leurs hemiesters, leurs anhydrides. Avantageusement (C2) est un EPR.

Avantageusement on utilise 60 à 95 parties de (C1) pour 40 à 5 parties de (C2).

Le mélange de (C1) et (C2) est greffé avec un acide carboxylique insaturé c'est-à-dire (C1) et (C2) sont cogreffés. On ne sortirait pas du cadre de l'invention en utilisant un dérivé fonctionnel de cet acide. Des exemples d'acide carboxylique insaturés sont ceux ayant 2 à 20 atomes de carbone tels que les acides acrylique, méthacrylique, maléique, fumarique et itaconique. Les dérivés fonctionnels de ces acides comprennent par exemple les anhydrides, les dérivés esters, les dérivés amides et les dérivés imides.

Des acides dicarboxyliques insaturés ayant 4 à 10 atomes de carbone et leurs dérivés fonctionnels, particulièrement leurs anhydrides, sont des monomères de greffage particulièrement préférés. Ces monomères de greffage comprennent par exemple les acides maléique, fumarique, itaconique, citraconique, allylsuccinique, cyclohex-4-ène-1,2-dicarboxylique, 4-méthyl-cyclohex-4-ène-1,2-dicarboxylique, bicyclo(2,2,1)-hept-5-ène-2,3-dicarboxylique, x-méthylbicyclo(2,2,1)-hept-5-ène-2,3-dicarboxylique, les anhydrides maléique, itaconique, citraconique, allylsuccinique, cyclohex-4-ène-1,2-dicarboxylique, 4-méthylènecyclohex-4-ène-1,2-dicarboxylique, bicyclo(2,2,1)hept-5-ène-2,3-dicarboxylique, et x-méthylbicyclo(2,2,1)hept-5-ène-2,2-dicarboxylique. On utilise avantageusement l'anhydride maléique.

Divers procédés connus peuvent être utilisés pour greffer un monomère de greffage sur le mélange de (C1) et (C2). Par exemple, ceci peut être réalisé en chauffant les polymères (C1) et (C2) à température élevée, environ 150° à environ 300°C, en présence ou en l'absence d'un solvant avec ou sans générateur de radicaux.

Dans le mélange de (C1) et (C2) modifié par greffage obtenu de la façon susmentionnée, la quantité du monomère de greffage peut être choisie d'une façon appropriée mais elle est de préférence de 0,01 à 10 %, mieux de 600 ppm à 2 % par rapport au poids de (C1) et (C2) greffés. La quantité du monomère greffé est déterminée par dosage des fonctions succiniques par spectroscopie IRTF. Le MFI de (C1) et (C2) ayant été cogreffés est de 5 à 30 g/ 10 min. (190°C - 2,16 kg) de préférence 13 à 20.

Avantageusement le mélange de (C1) et (C2) cogreffés, est tel que le rapport MFI₁₀ / MFI₂ est supérieur à 18,5, MFI₁₀ désignant l'indice d'écoulement à 190°C sous une charge de 10 kg et MFI₂ l'indice sous une charge de 2,16 kg. Avantageusement le MFI₂₀ du mélange des polymères (C1) et (C2) cogreffés est inférieur à 24. MFI₂₀ désigne l'indice d'écoulement à 190°C sous une charge de 21,6 kg.

Dans tous les exemples suivants de liants le greffage par un acide carboxylique insaturé signifie, comme dans ce premier exemple, que c'est aussi un derivé de cet acide tel que par exemple un anhydride ou qu'on greffe un anhydride d'acide carboxylique insaturé.

A titre de deuxième exemple de liant on peut citer les mélanges comprenant :
- 5 à 30 parties d'un polymère (D) lui-même comprenant un mélange d'un polyéthylène (D1) de densité comprise entre 0,910 et 0,940 et d'un polymère (D2) choisi parmi les élastomères, les polyéthylènes de très basse densité et les polyéthylènes métallocènes, le mélange (D1) + (D2) étant cogreffé par un acide carboxylique insaturé,
- 95 à 70 parties d'un polyéthylène (E) de densité comprise entre 0,910 et 0,930,
- le mélange de (D) et (E) étant tel que :
   · sa densité est comprise entre 0,910 et 0,930,
   · la teneur en acide carboxylique insaturé greffé est comprise entre 30 et 10000 ppm,
   · le MFI (ASTM D 1238 - 190°C- 2,16 kg) est compris entre 0,1 et 3 g / 10 min Le MFI désigne l'indice d'écoulement à l'état fondu.

La densité du liant est avantageusement comprise entre 0,915 et 0,920. Avantageusement (D1) et (E) sont des LLDPE , de préférence ils ont le même comonomere. Ce comonomère peut être choisi parmi est le 1-héxène, le 1-octène et le 1-butène.

A titre de troisième exemple de liant on peut citer les mélanges comprenant:
- 5 à 30 parties d'un polymère (F) lui-même comprenant un mélange d'un polyéthylène (F1) de densité comprise entre 0,935 et 0,980 et d'un polymère (F2) choisi parmi les élastomères, les polyéthylènes de très basse densité et les copolymères de l'éthylène, le mélange (F1) + (F2) étant cogreffé par un acide carboxylique insaturé,
- 95 à 70 parties d'un polyéthylène (G) de densité comprise entre 0,930 et 0,950,
- le mélange de (F) et (G) étant tel que :
   · sa densité est comprise entre 0,930 et 0,950 et avantageusement entre 0,930 et 0,940,
   · la teneur en acide carboxylique insaturé greffé est comprise entre 30 et 10000 ppm,
   · le MFI (indice d'écoulement à l'état fondu) mesuré selon ASTM D 1238 à 190°C - 21,6 kg est compris entre 5 et 100.

A titre de quatrième exemple de liant on peut citer le polyéthylène greffé par de l'anhydride maléique ayant un MFI 0,1 à 3, de densité comprise entre 0,920 et 0,930 et qui contient 2 à 40 % en poids d'insolubles dans le n-décane à 90°C. Pour determiner les insolubles dans le n- decane le polyéthylène greffé est dissous dans le n-décane à 140°C, on le refroidit à 90°C, des produits précipitent ; puis on le filtre et le taux d'insolubles est le pourcentage en poids qui précipite et est recueilli par filtration à 90°C. Si le taux est compris entre 2 et 40 % le liant a une bonne résistance à l'essence.

Avantageusement le polyéthylène greffé est dilué dans un polyéthylène non greffé et tel que le liant est un mélange de 2 à 30 parties d'un polyéthylène greffé de densité comprise entre 0,930 et 0,980 et de 70 à 98 parties d'un polyéthylène non greffé de densité comprise entre 0,910 et 0,940 de preference 0,915 et 0,935.

A titre de cinquième exemple de liant on peut citer les mélanges comprenant:
■ 50 à 100 parties d'un polyéthylène (J) homo ou copolymère de densité supérieure ou égale à 0,9,
■ 0 à 50 parties d'un polymère (K) choisi parmi (K1) le polypropylène homo ou copolymère, (K2) le poly(1-butène) homo ou copolymère et (K3) le polystyrène homo ou copolymère,
■ la quantité de (J) + (K) étant de 100 parties,
■ le mélange de (J) et (K) étant greffé par au moins 0,5 % en poids d'un monomère fonctionnel,
■ ce mélange greffé étant lui même dilué dans au moins un polyéthylène homo ou copolymère (L) ou dans au moins un polymère à caractère élastomérique (M) ou dans un mélange de (L) et (M),

Selon une forme de l'invention (J) est un LLDPE de densité 0,91 à 0,930, le comonomère ayant de 4 à 8 atomes de carbone. Selon une autre forme de l'invention (K) est un PEHD, avantageusement de densité au moins 0,945 et de préférence 0,950 à 0,980.

Avantageusement le monomère fonctionnel est l'anhydride maléique et sa teneur est de 1 à 5 % en poids de (J) + (K).

Avantageusement (L) est un LLDPE dont le comonomère a de 4 à 8 atomes de carbone et de préférence sa densité est d'au moins 0,9 et de préférence 0,910 à 0,930.

Avantageusement la quantité de (L) ou (M) ou (L) + (M) est de 97 à 75 parties pour 3 à 25 parties de (J) + (K), la quantité de (J) + (K) + (L) + (M) étant de 100 parties.

A titre de sixième exemple de liant on peut citer les mélanges constitués d'un polyéthylène de type HDPE, LLDPE, VLDPE ou LDPE, 5 à 35 % d'un polyéthylène métallocène greffé et 0 à 35 % d'un élastomère, le total étant 100%.

A titre de septième exemple de liant on peut citer les mélanges comprenant :
- au moins un polyéthylène ou un copolymère de l'éthylène,
- au moins un polymère choisi parmi le polypropylène ou un copolymère du propylène, le poly (1-butène) homo ou copolymère, le polystyrène homo ou copolymère et de préférence le polypropylène,
ce mélange étant greffé par un monomère fonctionnel, ce mélange greffé étant lui-même éventuellement dilué dans au moins une polyoléfine ou dans au moins un polymère à caractère élastomérique ou dans leur mélange. Dans le mélange précédent qu'on greffe le polyéthylène représente avantageusement au moins 50% de ce mélange et de préférence 60 à 90% en poids.

Avantageusement le monomère fonctionnel est choisi parmi les acides carboxyliques et leurs dérivés, les chlorures d'acides, les isocyanates, les oxazolines, les époxydes, les amines ou les hydroxydes et de préférence les anhydrides d'acides dicarboxyliques insaturés.

A titre de huitième exemple de liant on peut citer les mélanges comprenant :
- au moins un polyéthylène LLDPE ou VLDPE
- au moins un élastomère à base d'ethylene choisi parmi les copolymères éthylène - propylène et les copolymères éthylène - butene
- ce mélange de polyéthylène et d'élastomère étant greffé par un acide carboxylique insaturé ou un dérivé fonctionnel de cet acide
- ce mélange cogreffé étant éventuellement dilué dans un polymère choisi parmi les polyethylenes homo ou copolymères et les copolymères blocs du styrène
le liant ayant :
(a) une teneur en éthylène qui n'est pas inférieure à 70% en mole
(b) une teneur en acide carboxylique ou en son dérivé, de 0,01 à 10% en poids du liant et
(c) un rapport MFI₁₀/MFI₂ de 5 à 20, où MFI₂ est l'indice d'écoulement en masse fondue à 190°C sous une charge de 2,16 kg, mesuré suivant ASTM D1238, MFI₁₀ est l'indice d'écoulement en masse fondue à 190°C sous une charge de 10 kg suivant ASTM D1238.

A titre de neuvième exemple de liant on peut citer les mélanges comprenant :
- 5 à 35 parties d'un polymère (S) lui-même constitué d'un mélange de 80 à 20 parties d'un polyéthylène métallocène (S1) de densité comprise entre 0,865 et 0,915 et de 20 à 80 parties d'un polyéthylène LLDPE (S2) non métallocène, le mélange (S1) + (S2) étant cogreffé par un acide carboxylique insaturé,
- 95 à 65 parties d'un polyéthylène (T) choisi parmi les polyéthylènes homo ou copolymères et les élastomères,
- le mélange de (S) et (T) étant tel que :
   · la teneur en acide carboxylique insaturé greffé est comprise entre 30 et 100000 ppm,
   · le MFI (ASTM D 1238 - 190°C- 2,16 kg) est compris entre 0,1 et 10 g / 10 min. Le MFI désigne l'indice d'écoulement à l'état fondu et s'exprime en grammes par 10 minutes.

S'agissant de la couche à base de polyamide et tout d'abord du polyamide il est choisi parmi le PA 11, le PA 12, les polyamides aliphatiques résultant de la condensation d'une diamine aliphatique ayant de 6 à 12 atomes de carbone et d'un diacide aliphatique ayant de 9 à 12 atomes de carbone et les copolyamides 11/12 ayant soit plus de 90% de motifs 11 soit plus de 90% de motifs 12.

A titre d'exemple de polyamides aliphatiques résultant de la condensation d'une diamine aliphatique ayant de 6 à 12 atomes de carbone et d'un diacide aliphatique ayant de 9 à 12 atomes de carbone on peut citer :
le PA 6-12 résultant de la condensation de l'hexaméthylène diamine et de l'acide 1,12-dodecanedioïque,
le PA 9-12 résultant de la condensation de la diamine en C9 et de l'acide 1,12-dodecanedioïque,
le PA 10-10 résultant de la condensation de la diamine en C10 et de l'acide 1,10-decanedioïque,
le PA 10-12 résultant de la condensation de la diamine en C10 et de l'acide 1,12-dodecanedioïque.

Quant aux copolyamides 11/12 ayant soit plus de 90% de motifs 11 soit plus de 90% de motifs 12, ils résultent de la condensation de l'acide amino 1-undecanoïque avec le lauryllactame (ou l'alpha omega amino acide en C12).

Le PA peut être conducteur.

S'agissant de la polyoléfine fonctionnalisée par un anhydride d'acide carboxylique insaturé Elle peut être choisie parmi les liants qu'on a défini plus haut sauf que le groupe fonctionnel est limité aux anhydrides d'acides carboxyliques insaturés.

Avantageusement la proportion de polyoléfine fonctionnalisée est de 1 à 20% en poids pour respectivement 99 à 80% de polyamide et de préférence de 5 à 15% pour respectivement 95 à 85% de polyamide.

Le mélange de polyoléfine fonctionnalisée et de polyamide peut comprendre aussi des charges, du noir de carbone, des antioxydants et des stabilisants. Ces mélanges peuvent être preparés par mélange à l'état fondu des différents constituants (sauf les éventuels additifs solides) selon les techniques habituelles des matières thermoplastiques.

S'agissant de l'épaisseur des différentes couches celle de polyamide peut être comprise entre 120 et 180 µm, celle de liant entre 20 et 50µm et celle de primaire entre 10 et 15 µm.

### [Exemples]

Dans les exemples suivants l'expression "Melt Index" ou "Melt Flow Index" désigne l'indice de fluidité à l'état fondu.

### Exemple 1

Les mélanges de polyamides suivants (% en poids) sont réalisés sur extrudeuse bivis type Werner®40 à 230°C et granulés.

| **Tableau 1.1** | **PA12-0 (témoin)** | **PA12-1** |
|---|---|---|
| PA12 | 98.1% | 92.1% |
| PE-g-AM (anhydride maleique) | 0% | 6% |
| MM Noir (mélange maître) | 0.9% | 0.9% |
| Stabilisant | 1% | 1% |

| Melt Index 235°C, 1kg | | |
|---|---|---|
| g/10min | 24.9 | 18.5 |

Le PA12 utilisé est un grade fluide produit par ATOFINA (AECN). Le PE-g-AM est un mélange de polyoléfines greffées avec de l'anhydride maléique produit par ATOFINA du type du huitième exemple de liant cité dans la description (Orevac 18302).

Extrusion sur tube aluminium anodisé : Un tube en aluminium 3003 de dimension 9*12 est traité par oxydation anodique phosphorique, chauffé à une température comprise entre 200 et 220°C puis revêtu de polyamide par extrusion tête d'équerre et enfin refroidi par eau. La température du polyamide dans la tête d'extrusion est 230°C. Le revêtement est réalisé à 7 mètres par minute. L'épaisseur du revêtement polyamide est de 150±30µm.

### Evaluation des revêtements.

L'adhérence initiale du revêtement sur l'aluminium anodisé est évaluée selon la norme NFT 58-112. Le test consiste à peler manuellement le revêtement que l'on détache préalablement avec un couteau. Si le revêtement se décolle spontanément la cotation est 0, lorsque le pelage est difficile voire impossible la cotation est de 4. L'adhérence du revêtement sur le tube est également évaluée après exposition pendant 168h à du liquide de frein à 100°C (DOT4).

Les tubes revêtus en section droite sont exposés au brouillard salin neutre (5% NaCl, 35°C). L'adhérence du revêtement est mesurée par la norme NFT58-112 après 1000h et après 2000h d'exposition.

Le tableau suivant donne les performances des tubes revêtus respectivement de PA12-0 et de PA12-1. Le tube revêtu de PA12-1 a des propriétés bien supérieures à celles du tube revêtu de PA12-0 standard.

| **Tableau 1.2 : Tube revêtus de** | **PA12-0 (témoin)** | **PA12-1** |
|---|---|---|
| *Adhérence initiale* | | |
| Cotation NFT 58-112 | 2 | 3-3.5 |

| *Adhérence après DOT4 100°C, 168h* | | |
|---|---|---|
| Cotation NFT 58-112 | 0.5-1 | 1.5-2 |

| *Adhérence après Brouillard salin* | | |
|---|---|---|
| NFT 58-112 après 1000h | 1.5 | 2.5 |
| NFT 58-112 après 2000h | 1 | 2-2.5 |

| *Délamination après 1000h Brouillard salin* | | |
|---|---|---|
| à partir de l'entaille | 4,5mm | 2,5mm |

### Exemple 2

Les mélanges décrit dans l'exemple 1 sont extrudés sur ligne cast (Collin®) de façon à obtenir des films d'épaisseur 200µm environ. Dans cet exemple les substrats utilisés sont des plaques d'essai en acier electrozingué de dimension 190*90*0.75mm distribués par la société ETALON (Ozoir La Ferrière). Après dégraissage au trichloroéthylène, les plaques sont revêtues de primaire hydrodiluable Primgreen® LAT12035 (primaire de type époxy commercialisé par ATOFINA) appliqué au pistolet. L'épaisseur du primaire sec est de l'ordre de 10-15µm. Les films de polyamide sont assemblées sur les plaques par pressage. Les conditions de pressage sont les suivantes (presse Collin®) :
Phase 1 : 275°C sous faible pression pendant 8 minutes
Phase 2 : 275°C sous 20 bars de pression pendant 8minutes
Phase 3 : refroidissement (20°C/minute environ)

L'épaisseur finale du revêtement polyamide est de 150µm environ. Les revêtement sont évalués de la même manière que dans l'exemple 1. Des plaques avec revêtement entaillé en croix jusqu'au métal sont également placées dans l'enceinte du brouillard salin, afin de mesurer la délamination (longueur sur laquelle le revêtement se décolle à partir de l'entaille). Les performances après exposition au brouillard salin sont présentées dans le tableau 2.1. Pour la délamination, le minimum et le maximum observés sont reportés. On constate que la délamination est significativement moindre dans le cas du PA12-1.

| **Tableau 2.1 : Plaques électrozinguées revêtues de primaire** | **PA12-0 (témoin)** | **PA12-1** |
|---|---|---|
| *Adhérence initiale* | | |
| Cotation NFT 58-112 | 4 | 4 |

| *Adhérence après Brouillard salin* | | |
|---|---|---|
| NFT 58-112 après 300h | 3.5 | 3.5 |
| NFT 58-112 après 500h | 3.5 | 3.5 |
| NFT 58-112 après 1000h | 3.5 | 3.5 |

| *Délamination après brouillard salin* | | |
|---|---|---|
| min-max (mm) après 300h (4 essais) | 1-9 | 1-3 |
| | 7-30 | 0-0 |
| | 0-1 | 0-0 |
| | 1-6 | 1-5 |
| min-max (mm) après 500h (2 essais) | 3-10 | 1-4 |
| | 1-3 | 0-0 |
| min-max (mm) après 1000h (2 essais) | 3-10 | 4-10 |
| | 30-30 | 0-0 |

### Exemple 3

Les mélanges suivants sont préparés en extrudeuse comme décrit dans l'exemple 1. Ces mélanges sont extrudés en feuille puis pressés sur des plaques electrozinguées dégraissées comme dans l'exemple 2, mais sans primaire, ni autre traitement de surface. Les formulations et l'adhérence mesurée selon la norme NFT 58-112 sont reportées dans le tableau 3.1. On constate que les mélanges contenant du PA11 ont une adhérence sensiblement augmentée.

| **Tableau 3.1** | **PA12-2** | **PA12-3** | **PA12-4** | **PA12-5** |
|---|---|---|---|---|
| PA12 | 93% | 81% | 63% | 63% |
| PA11 | | 12% | 24% | 24% |
| PE-g-AM 1 | 6% | 6% | 12% | |
| PE-g-AM 2 | | | | 12% |
| Stabilisant | 1% | 1% | 1% | 1% |

| *Adhérence NFT 58-112* | | | | |
|---|---|---|---|---|
| cotation | 0.5-1 | 2-2.5 | 2.5-3 | 3.5 |

Le PA12 utilisé est le même que dans l'exemple 1

Le PA11 utilisé est un grade fluide BMF0

Le PE-g-AM1 est l'Orevac 18302 (voir ex 1)

Le PE-g-AM2 est un mélange de polyoléfines greffé avec de l'anhydride maleique, c'est le liant du neuvième exemple de liant cité dans la description.

### Exemple 4

On considère dans cette exemple des revêtement bicouches sur acier electrozingué phosphaté (phosphatation trication, sans rinçage chromique, plaques d'essais ETALON). La première couche est un liant et la deuxième couche le PA12-0 décrit dans l'exemple 1. Les liants sont d'abord extrudés sous forme de film d'épaisseur 50µm. Les bicouches sont réalisés sous presse comme décrit dans l'exemple 2. Aucun primaire n'est appliqué. Le revêtement final a une épaisseur totale de 150µm, le liant ayant une épaisseur comprise entre 20 et 50µm. Ces revêtements sont évalués en brouillard salin. On reporte les résultats dans le tableau 4.1.

On constate que seul le revêtement avec PE-g-AM comme liant conserve une bonne adhérence après 250h de brouillard salin. Les autres liants sont donnés à titre de comparaison.

| **Tableau 4.1 Liant + PA12-0** | **Ionomère** | **Terpo AA** | **Copo GMA** | **Terpo AM** | **PE-g- AM** |
|---|---|---|---|---|---|
| *Adhérence initiale* | | | | | |
| NFT 58-112 | 0.5 | 3.5 | 3.5-4 | 1.5-2 | 3.5 |

| *Adhérence après 250h de brouillard salin* | | | | | |
|---|---|---|---|---|---|
| NFT 58-112 | 0 | 2 | 0 | 1 | 3.5 |
| Ionomer : Surlyn 1901 Dupont® | | | | | |
| Terpo AA : copolymère éthylène-acrylate d'alkyle-acide acrylique Lucalen® 3110 BASF | | | | | |
| Copo GMA : copolymère éthylène-méthacrylate de glycidyle Lotader® AX 8840 ATOFINA | | | | | |
| Terpo AM : copolymère éthylène-acrylate d'alkyle-anhydride maleique, Lotader® 3410 ATOFINA | | | | | |
| PE-g-AM : Orevac 18302 | | | | | |

### Exemple 5

On revêt par extrusion tête d'équerre un tube acier zingué traité avec une chromatation CrIII. La vitesse de ligne est de 5m/min. La température du PA12 en tête est de 220°C. Le primaire Primgreen LAT12035 est déposé sur tube froid, l'excès d'eau est éliminé par un flux d'air chaud puis le tube est chauffé par induction à 330°C pour réticuler le primaire juste avant application du polyamide. Dans le cas où on n'utilise pas de primaire, la température du tube est plus faible (200-210°C).

Pour l'évaluation de l'adhérence on utilise le test NFT 58-112 sur des longueurs droites. Une adhérence très faible est cotée 0, une adhérence excellente est cotée 4. Les tubes sont placé dans une enceinte de brouillard salin. Pour chaque essai trois tubes sont entaillés jusqu'au métal sur 20 cm de long et exposés face entaillée vers le haut pendant 500h. On évalue la délamination moyenne depuis l'entaille. L'adhérence est évaluée deux heures après sortie de l'enceinte sur trois échantillons de tube non entaillés.

Le tableau résume les résultats obtenus avec et sans primaire (moyenne sur trois tubes). Les performances sont excellentes pour le système avec primaire aqueux, en particulier la délamination est nulle. Le système sans primaire a une adhérence moyenne qui chute peu après exposition au brouillard salin, et la délamination reste faible. La température du tube avant application est importante. Ainsi le PA12-1 appliqué sur tube à 240°C est mauvais en délamination (18mm=délamination complète).

| | Primaire | PA12 | T tube °C | Epaisseur | Adh T0 NFT-58112 | Adh 500h NFT 58-112 | Délamination (mm) |
|---|---|---|---|---|---|---|---|
| Zn/CrIII | Primgreen | PA12-1 | 330 | 100µm | 3,5 | 3 | 0,0 |
| Zn/CrIII | sans | PA12-1 | 200 | 60µm | 2 | 1,875 | 1,2 |
| Zn/CrIII | sans | PA12-1 | 240 | 100µm | 2,25 | 0,75 | 18,0 |
| Adh TO signifie "adhésion initiale " | | | | | | | |

## Revendications

1. Surface métallique revêtue comprenant successivement en partant du métal:
• éventuellement une couche de primaire,
• éventuellement une couche de liant,
• une couche à base de polyamide constituée d'un mélange de polyamide et d'une polyoléfine fonctionnalisée par un anhydride d'acide carboxylique insaturé.

2. Surface métallique revêtue selon la revendication 1 dans laquelle le métal est l'aluminium.

3. Surface métallique revêtue selon la revendication 2 dans laquelle l'aluminium est anodisé.

4. Surface métallique revêtue selon la revendication 1 dans laquelle le métal est l'acier.

5. Surface métallique revêtue selon la revendication 4 dans laquelle l'acier est revêtu par le zinc ou un alliage à base de zinc.

6. Surface métallique revêtue selon la revendication 4 dans laquelle l'acier est revêtu par l'aluminium ou un alliage à base d'aluminium.

7. Surface métallique revêtue selon la revendication 4 dans laquelle l'acier est traité par chromatation ou phosphatation.

8. Surface métallique revêtue selon la revendication 5 ou 6 dans laquelle l'acier revêtu de zinc ou d'alliage à base de zinc ou revêtu d'aluminium ou d'alliage à base d'aluminium est ensuite traité par chromatation ou phosphatation.

9. Surface métallique revêtue selon l'une quelconque des revendications précédentes dans laquelle le liant est une polyoléfine fonctionnalisée portant une fonction acide carboxylique ou anhydride d'acide carboxylique éventuellement mélangée avec une polyoléfine non fonctionnalisée.

10. Surface métallique revêtue selon l'une quelconque des revendications précédentes dans laquelle la proportion de polyoléfine fonctionnalisée est de 1 à 20% en poids pour respectivement 99 à 80% de polyamide.

11. Surface métallique revêtue selon la revendication 10 dans laquelle la proportion de polyoléfine fonctionnalisée est de 5 à 15% pour respectivement 95 à 85% de polyamide.

12. Surface métallique revêtue selon l'une quelconque des revendications précédentes dans laquelle le polyamide est le PA 12.

13. Surface métallique revêtue selon l'une quelconque des revendications précédentes qui est la surface extérieure de tubes.
